(19) Europäisches Patentamt / European Patent Office / Office européen des brevets

(11) **EP 3 124 991 B1**

(12) **EUROPEAN PATENT SPECIFICATION**

(45) Date of publication and mention of the grant of the patent:
**18.04.2018 Bulletin 2018/16**

(51) Int Cl.:
***G01S 5/30*** *(2006.01)*

(21) Application number: **15179068.0**

(22) Date of filing: **30.07.2015**

(54) **METHOD FOR DETERMINING A SPATIAL CORRECTION OF AN ULTRASONIC EMITTER AND MEASUREMENT DEVICE FOR APPLYING THE METHOD**

VERFAHREN ZUR BESTIMMUNG EINER RÄUMLICHEN KORREKTUR EINES ULTRASCHALLSENDERS UND MESSVORRICHTUNG ZUR ANWENDUNG DES VERFAHRENS

PROCÉDÉ POUR DÉTERMINER UNE CORRECTION SPATIALE D'UN ÉMETTEUR D'ULTRASONS ET DISPOSITIF DE MESURE POUR APPLIQUER LE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.02.2017 Bulletin 2017/05**

(73) Proprietor: **Braun GmbH**
**61476 Kronberg (DE)**

(72) Inventors:
• **Engelmohr, Reiner**
  **61476 Kronberg/Taunus (DE)**
• **Wolf, Michael**
  **61476 Kronberg/Taunus (DE)**
• **Harrington, Fiona**
  **61476 Kronberg/Taunus (DE)**
• **Busch, Achim**
  **65428 Rüsselsheim (DE)**
• **Sigel, Christian**
  **65428 Rüsselsheim (DE)**
• **Shahid, Muhammad Ali**
  **65428 Rüsselsheim (DE)**
• **Geissen, Hans**
  **65428 Rüsselsheim (DE)**
• **Honisch, Frank**
  **65428 Rüsselsheim (DE)**

(74) Representative: **Schneider, Stefan Michael**
**Procter & Gamble Service GmbH**
**IP Department**
**Sulzbacher Straße 40-50**
**65824 Schwalbach am Taunus (DE)**

(56) References cited:
**DE-U1-202012 010 638**

• **SHIGEKI NAKAMURA ET AL: "Measuring phase characteristics of ultrasonic microphones for accurate ultrasonic localization Systems", ULTRASONICS SYMPOSIUM (IUS), 2011 IEEE INTERNATIONAL, IEEE, 18 October 2011 (2011-10-18), pages 979-982, XP032230862, DOI: 10.1109/ULTSYM.2011.0240 ISBN: 978-1-4577-1253-1**
• **HIROMICHI HASHIZUME ET AL: "Fast and Accurate Positioning Technique Using Ultrasonic Phase Accordance Method", TENCON 2005 2005 IEEE REGION 10, IEEE, PI, 1 November 2005 (2005-11-01), pages 1-6, XP031015650, ISBN: 978-0-7803-9311-0**

**Description**

FIELD OF THE INVENTION

A method for determining a spatial correction of a primary ultrasonic emitter by evaluating the ultrasonic signal emitted by the primary ultrasonic emitter is described. The primary ultrasonic emitter is part of an ultrasonic emitter array comprising the primary ultrasonic emitter and at least two secondary ultrasonic emitters. Further, a use of this method for tracking of the position of the primary ultrasonic emitter is described as well as a measurement device for applying this method.

BACKGROUND OF THE INVENTION

A spatial correction of the position of the ultrasonic emitter is in particular useful for position tracking. The principle of position tracking is a precise measurement of propagation times between ultrasonic emitters which are typically applied at devices or individuals, or more generally objects, and stationary microphones, in particular in a laboratory environment. The propagation or running time of the ultrasonic signals, i.e. ultrasonic waves emitted by the ultrasonic emitters, is determined by a microphone working as ultrasonic receiver with a temporary resolution better than $\Delta t = 0.1 \, \mu s$. For converting propagation times into distances, the absolute value of the speed of sound c has to be known. Abundant literature describes the environmental effects on the speed of sound in air, as a function of temperature, pressure, humidity, $CO_2$ concentration, frequency and the like. However, the absolute uncertainty in speed of sound c in air is estimated to be less or equal to 0.1 m/s over a temperature range of about 0° C to 30° C. Accordingly, at environment conditions, the speed of sound C is about C= 340 m/s.

This means a special resolution limit $\Delta r$ of $\Delta r = c \cdot \Delta t = 340 \, m/s \cdot 0.1 \mu s < 0.1 mm$.

The most relevant parameters, temperature and moisture, can be recorded during measurement to adapt changes in the speed of sound c for guaranteeing sufficient precision. However, systematic experiments have revealed that measurements are distorted if the angle between the emitter's normal vector (being defined as a nominal emission direction of the ultrasonic emitter) and the connecting line of the emitter and receiver (microphone) is higher than approximately $\beta = 20°$. This deviation might not have a big influence on the measurement, if the position and orientation of the ultrasonic emitter during consecutive measurements is not changed. However, in motion tracking applications, the position and orientation of the ultrasonic emitter can vary strongly with angles $\beta$ much higher than 20°. As a result, the motion tracking of the position of the emitter can show huge artificial position variations due to different orientations of the emitter to the receiver even if the actual position of the emitter is not changed.

It is therefore an object to provide an easy and effective correction for this artificial effect depending on a variation of the orientation of the ultrasonic emitter relative to the ultrasonic receivers.

SUMMARY OF THE INVENTION

In accordance with an aspect of the present description, a method is provided for determining a spatial correction of a primary ultrasonic emitter by evaluating the ultrasonic signal emitted by the primary ultrasonic emitter and received by at least three ultrasonic receivers calibrated in space, wherein the primary ultrasonic emitter is arranged in a coplanar emitter array with at least two secondary ultrasonic emitters and the nominal emission direction of the primary ultrasonic emitter is known relative to the coplanar emitter array, and wherein the ultrasonic receivers are positioned to receive ultrasonic signals from the primary ultrasonic emitter and the at least two secondary ultrasonic emitters of the emitter array, said method comprising the following steps:

- Emitting consecutively ultrasonic signals from the primary ultrasonic emitter and at least two of the secondary ultrasonic emitters.
- Measuring the runtime of the ultrasonic signal to the (at least three) ultrasonic receivers and determining an uncorrected position of the ultrasonic emitter for each of the primary ultrasonic emitter and the secondary ultrasonic emitters on the basis of the runtime of its ultrasonic signal by multiplying the measured runtime with the known speed of sound as described before to receive the distance between the ultrasonic emitter and the respective ultrasonic receivers. Having known distances of the emitter to at least three receivers calibrated in space, the position can be detected with known trilateration methods. Possible corrections for environmental effects, such as temperature and/or moisture, can be optimally be applied if detected.
- Determining the normal of the plane of the emitter array wherein the plane is defined by the uncorrected positions of the primary ultrasonic emitter and the (coplanar and not linear dependent) secondary ultrasonic emitters. By using the uncorrected positions of the primary ultrasonic emitter and the two secondary ultrasonic emitters, two connecting vectors between different ultrasonic emitters, e.g. between the primary ultrasonic emitter and the first ultrasonic emitter and the primary ultrasonic emitter and the second secondary ultrasonic emitter, can be defined. The cross-product of these two vectors define the normal of the plane of the emitter array.

- Determining the emission angle between the nominal emission direction of the primary emitter and the direction of a straight line between the primary ultrasonic emitter and one of the ultrasonic receivers for each of the ultrasonic receivers. This can be achieved easily by means of the dot product of the normal vector of the plane of the emitter array (if coincident with the nominal emission direction) as obtained before and the vectors in direction of the connection lines between the primary ultrasonic emitter and each of the ultrasonic receivers or microphones, respectively.
- Determining the uncorrected distance between the primary ultrasonic emitter and each of the ultrasonic receivers, i.e. at least three uncorrected distances from the primary ultrasonic emitter to each of the at least three receivers. This distance can easily be obtained by using the uncorrected position of the primary ultrasonic emitter and the positions of the ultrasonic receivers known from the calibration of the ultrasonic receivers in space.
- Determining a distance correction value for the distance between the primary ultrasonic emitter and each of the ultrasonic receivers depending on the respective emission angle, i.e. the emission angle between the nominal emission direction of the primary emitter and the direction of the line between the primary ultrasonic emitter and each of the ultrasonic receivers.
- Applying the respective distance correction values to the uncorrected distances between the ultrasonic emitter and each of the ultrasonic receivers to receive corrected distances between the primary ultrasonic emitter and each of the ultrasonic receivers.
- Determining a corrected position of the primary ultrasonic emitter on basis of the corrected distances between the primary ultrasonic emitter and each of the ultrasonic receivers, e.g. by use of known trilateration methods.

In accordance with an aspect of the present description, a measurement device is provided for performing a method for determining a spatial correction of an ultrasonic emitter. The measurement device comprises at least one primary and at least two secondary ultrasonic emitters arranged in a coplanar emitter array wherein the nominal emission direction of the primary ultrasonic emitter and preferably the at least two ultrasonic secondary emitters is known relative to a coplanar arrangement in the emitter array. The measurement device comprises further at least three ultrasonic receivers, such as microphones, calibrated in space and positioned preferably stationary in space (e.g. a laboratory) to receive ultrasonic signals from the primary ultrasonic emitter and the at least two secondary ultrasonic emitters of the emitter array. Further, the measurement device comprises a processing unit which is setup to perform a method as described before or parts thereof.

Further features, advantages and possibilities of use of the proposed method are described in the following with regard to an example embodiment and the drawings. All features described and/or shown in the drawings are subject matter of the present description, irrespective of the grouping of the features in the claims and their back references.

BRIEF DESCRIPTION OF THE DRAWINGS

Fig. 1    shows schematically a three-dimensional view of a measurement device for the applying the method for determining a spatial correction of an ultrasonic emitter according to an embodiment of the present description.

Fig. 2    shows schematically the geometrical relation of the emission angle described as polar emission angle $\beta$ and azimuthal emission angle $\varphi$ of the primary ultrasonic emitter with respect to an ultrasonic receiver.

Fig. 3    shows as an example a data set of reconstructed but uncorrected positions of the primary ultrasonic emitter for different polar emission angles $\beta$.

Fig. 4    shows a diagram of example distance correction values applied in line with the proposed method.

Fig. 5    shows schematically the steps of the proposed method for determining a spatial correction of the primary ultrasonic emitter according to a embodiment.

Fig. 6    shows a plot of uncorrected positions of the ultrasonic emitter and the respective corrected positions obtained by the proposed method according to Fig. 5.

Fig. 7    shows the results of a second iteration (multiple appliance of the proposed method with respect to a single appliance of the method).

DETAILED DESCRIPTION OF THE INVENTION

With respect to the proposed method of determining a spatial correction of a primary ultrasonic emitter, this method is in particular dependent on the emission direction of the ultrasonic wave emitted by the ultrasonic emitter relative to the ultrasonic receiver. The ultrasonic signal or wave emitted by the primary ultrasonic emitter and received by at least three ultrasonic receivers, such as microphones, calibrated in space are evaluated. The primary ultrasonic emitter is arranged in a coplanar emitter array with at least two secondary ultrasonic emitters and the nominal emission direction of the primary ultrasonic emitter is known relative to the coplanar arrangement. Preferably, all ultrasonic emitters have the same orientation and nominal emission direction as the primary ultrasonic emitter, or are at least known relative to the coplanar arrangement. The ultrasonic receivers are positioned (preferably stationary in space) to receive ultrasonic signals from the primary ultrasonic emitter and the at least two secondary ultrasonic emitters of the coplanar emitter array.

With the method proposed according to the present description, a correction of the position of the primary ultrasonic emitter position is achieved based on the measured runtime signals. The secondary ultrasonic emitters are used mainly to define a plane used to calculate the normal vector of the coplanar emitter array and the nominal emission direction of (at least) the primary ultrasonic emitter which is known relative to the coplanar emitter array. It is accordingly possible to determine the nominal emission direction of the primary ultrasonic emitter also by other detectors instead of the secondary ultrasonic emitters. For example, an inertial measurement unit (IMU) attached to the primary ultrasonic emitter unit might be used to determine the orientation of the ultrasonic emitter (and therewith the nominal emission direction) in space.

In the sense of the present description, the term "calibrated in space" means that the position of the (at least three) ultrasonic receivers is known in space. The calibration might be an absolute calibration in the sense that the position of the ultrasonic receivers can be described in one defined coordinate system, e.g. the coordinate system of the laboratory. Another possibility is a relative calibration in the sense that the ultrasonic receivers are arranged in a receiver array in which the position of each of the ultrasonic receivers is known relative to the other ultrasonic receivers. In this case, the ultrasonic receivers are calibrated in a coordinate system relative to their receiver array. This relative coordinate system is also suited to describe the space and the position of certain points in space (such as the position of an ultrasonic emitter).

With (at least) three ultrasonic receivers calibrated in space it is possible to determine the position of an ultrasonic emitter (in the calibrated space) by receiving the same ultrasonic signal (i.e. the signal of an ultrasonic wave) in the (at least) three ultrasonic receivers, determining the runtime of the ultrasonic signal from the ultrasonic emitter to each of the (at least) three ultrasonic receivers and correlating the runtime information of each of the ultrasonic receivers by a known trilateration method. In case of more than three ultrasonic receivers, a multilateration can be applied instead of a trilateration (used for three ultrasonic receivers). For this application, the terms "trilateration" and "multilateration" are used synonymously for the use of lateration methods, depending on the number of ultrasonic receivers considered.

The runtime information can be transformed into distance information by use of the known speed of sound ($c \approx 340$ m/s) in air. Especially at environment conditions between 0°C and 30°C, speed of sound can be calculated by easy-to-use equations.

Methods for calibration, evaluation of the runtime signal of ultrasonic emitters and receivers as well as trilateration methods to determine positions in space are well known to the one skilled in the art and have not to be described here more in detail.

In line with the present description, the primary ultrasonic emitter is preferably orientated such in the emitter array that its nominal emission direction is parallel to the normal of the plane spanned by the primary and the at least two secondary ultrasonic emitters (coplanar arrangement of these ultrasonic emitters). The "normal" of the plane is the direction perpendicular to the (real or virtual) plane surface. A virtual plane is a plane defined by the positions of the before mentioned three ultrasonic emitters without being a real (tangible) plane in the measurement device or its emitter unit.

For a typical ultrasonic emitter, such as a piezo element having a vibrating surface to create the ultrasonic waves, the nominal emission direction is also perpendicular to the vibrating surface. However, for the method according to the present description, it is sufficient if the nominal emission direction of the primary ultrasonic emitter (and preferably of the further secondary ultrasonic emitters arranged coplanar with the primary ultrasonic emitter) is known with respect to the normal of the plane.

The nominal emission direction of the ultrasonic emitter is defined by a central axis of the ultrasonic wave emitted by the ultrasonic emitter. The center axis might be defined spatially using the lobe of the emitted ultrasonic wave. For example, this center axis can be defined by the maximum intensity of the emitted ultrasonic wave. For an ultrasonic emitter with a vibrating (and in particular planar) surface to create the ultrasonic wave, this center axis defined spatially by the maximum intensity coincidences typically with the normal of the vibrating surface. Accordingly, the normal of the vibrating or active surface of the ultrasonic emitter can be defined as nominal emission direction, in particular if the spatial characteristic of the ultrasonic emitter and the nominal emission direction might not be known from a product specification. Irrespective of a spatially definition or a definition based on the maximum intensity of the ultrasonic wave, the nominal emission direction might accordingly be defined as the normal of the vibrating surface of the ultrasonic emitters.

According to an embodiment of the proposed method, the distance correction value can be chosen from an empirical determination, wherein the empirical determination is performed by measuring the runtime of an ultrasonic signal emitted by an ultrasonic emitter of the same type as the primary ultrasonic emitter (including, of course, the identical primary ultrasonic emitter) at a constant known distance to an ultrasonic receiver for different emission angles and by correlating the different runtime of the ultrasonic signal at different emission angles to the constant known distance. This correction is easy to handle as it is mainly dependent on the emission angle. Further, the empirical determination can be performed once in advance and is then valid for all measurements with an ultrasonic emitter of the same type. This empirical determination is in particular useful for a laboratory environment.

The correlation of the different runtimes of the ultrasonic signal at different emission angles to the constant known distance between the ultrasonic emitter and the receiver can, for example, comprise the calculation of the emission angle-dependent speed of the ultrasonic signal. This emission angle-dependent speed can then be used to calculate a distance correction value based on the runtime of the signal. In this case, a distance correction value can be an angle-dependent speed of the ultrasonic signal. This correcting value can be used for a general correction that is in particular independent of the actual distance between the ultrasonic emitter and receiver array. However, the use of an angle-dependent speed of the ultrasonic signal as distance correction value implies that for each emission angle a suited speed of the ultrasonic signal or wave has to be used.

In an alternative embodiment, the correlation can comprise to calculate the emission-angle-dependent absolute distance difference to the constant known distance and to use these absolute distance differences as additive distance correction values. This is in particular useful if - in motion tracking applications - the mean distance between the ultrasonic emitter and receiver remains constant and the distance fluctuations are small with respect to the distance. Small fluctuations in this sense might be fluctuations in the range of 0 to 20 %, whereas the upper limit of the fluctuations range might be defined by the desired precision of the position correction value. This method can be used if a possible distance dependence of the distance correction value is small with regard to a dependence of the emission angle.

It is according to the present description also possible to normalize these absolute distance differences to a normalization distance of e.g. 1 meter. In line with the present description, however, every other normalization distance might be chosen. Thus, it is easy to calculate the absolute distance difference for any real distance between the primary ultrasonic emitter and the ultrasonic receiver by a multiplication of the actual distance with the normalized distance correction values. For the real distance value, the uncorrected distance might be used.

It is according to the present description also possible to use an additive distance correction value depending only from the ultrasonic emission angle. For this additive correction value, no significant dependence from the distance between ultrasonic emitter and ultrasonic receiver is observed. This might e.g. occur if the propagation of the ultrasonic waves is influence by e.g. geometrical effects at the ultrasonic emitter. One reason for such a geometrical effect might be the aperture of the casing of the ultrasonic emitter for the emission of the ultrasonic wave. This effect is often dominant in laboratory appliances. Therefore, a merely additive distance correction value can be used according to an embodiment of the present description.

However, also a combination of an additive distance correction value and a multiplicative distance correction value can be used in line with the present description. This might in particular be useful if during the empirical determination of the distance correction value also a distance dependency of the distance correction value showed up.

One simple possibility to obtain a distance correction value is storage of the distance correction values for the different emission angles as obtained by the empirical determination in a look-up table for determining the distance correction value corresponding to the determined emission angle. This is a straightforward method and can be implemented without high computational effort. Interpolation between different emissions angles is possible to estimate a more precise correction.

According to another embodiment, it is also possible that the distance correction values for the different emission angles are fitted to a distance correction function describing the distance correction value as a function of the emission angle. A suited distance correction function can be a polynomial, e.g. a fourth-order polynomial. However, the present description is not limited to this distance correction function. The one skilled in the art might determine other fit functions based on the distribution of the empirically determined position correction values in line with his general knowledge. The advantage of a distance correction function is easy implementation of the distance correction with an automatic interpolation between the empirically determined correction values. This is a very fast correction that delivers correction values real time because not many computational steps have to be performed.

For a spatially complete correction, i.e. a correction valid for the complete 3-dimensional space, it is in line with the present description possible to describe the emission angle in a spherical coordinate system as an polar angle $\beta$ and a azimuthal angle $\varphi$. According to an embodiment, the spherical coordinate system might describe polar emission angle $\beta$ as the angle between the nominal emission direction of the primary ultrasonic emitter and the straight line between the primary emitter and the ultrasonic receiver. The azimuthal emission angle $\varphi$ might then describe the angle of the projection of the straight line between the primary ultrasonic emitter and the ultrasonic receiver to a defined or distinguished direction on the plane of the emitter array (which is directed perpendicular to the nominal emission direction). This azimuthal angle $\varphi$ is used to get not only the (polar) angle $\beta$ to the receiver, but also its direction. This projection plane might, as already described, be identical to the coplanar emitter array of the primary and the (at least two) secondary ultrasonic emitters. Such a coordinate system is valuable because it describes the space based on a center point of the coordinate system being the point where the ultrasonic wave is generated. It accordingly describes the direction on the plane to the emitter.

One distinguished direction in the emitter plane can be chosen to define the azimuthal emission angle $\varphi$ = 0. This distinguished direction might be chosen as the horizontal orientation of the ultrasonic emitter array of the measurement device in space or any other defined direction.

For the spatially complete correction, the fourth-order polynomial might be chosen such that the polar emission angle $\beta$ is describing the fourth-order polynomial dependence and the parameters a, b, c, d, e of the fourth-order polynomial are describing a function in dependence of the azimuthal emission angle $\varphi$. The function for describing the dependence of the azimuthal angle $\varphi$ might also be a fourth-order polynomial or any other function, as described already for the distance correction function itself. The range of the polar and the azimuthal emission angle $\beta$, $\varphi$ might be chosen such that $\beta$ ranges from 0° to 180° and $\varphi$ ranges from 0° to 180°. As the lobe of the ultrasonic signal or wave emitted by an ultrasonic emitter has quite often a rotational symmetry around the nominal emission axis, another sensible range for the polar emission angle $\beta$ is 0° to 90° and for the azimuthal angle $\varphi$ is 0° to 360°.

Due to this rotational symmetry it turned out that the dependence of the distance correction value from the azimuthal angle $\varphi$ is much smaller than the dependence from the polar angle $\beta$ for the majority of ultrasonic emitters. The dependence of the azimuthal angle $\varphi$ might thus be neglected for a huge number of applications. It is, therefore, proposed according to an example embodiment that the emission angle is described as a polar emission angle $\beta$ only describing the angle included between the nominal emission direction of the primary emitter and the straight line between the primary ultrasonic emitter and the ultrasonic receiver for every azimuthal emission angle $\varphi$ around the nominal emission direction. The range of the polar emission angle $\beta$ is then preferably chosen to be 0° to 90°. The "azimuthal emission angle" or the "polar emission angle" is also named "azimuthal angle" or "polar angle", respectively, within this description.

The term "emission angle" might comprise a description based on the polar emission angle $\beta$ only or a description based on both, the polar emission angle $\beta$ and the azimuthal emission angle $\varphi$.

In line with the proposed method of the present description, the emission angle is determined based on the uncorrected positions of the ultrasonic emitter for each of the primary ultrasonic emitter and the secondary ultrasonic emitters on basis of the runtime of the respective ultrasonic signal to the at least three ultrasonic receivers. In the case that a very precise measurement is proposed, it is possible to perform an iteration for the determination of the distance correction value by determining the emission angle in a second iteration step based on the corrected positions of each of the primary and the secondary ultrasonic emitters. However, it turned out that the error in the determination of the emission angle in typical laboratory applications is less than 0,05°. Thus, this iteration is often not necessary for a precise determination of the position and/or orientation of the primary ultrasonic emitter.

For the determination of the orientation of the primary emitter it is thus possible to determine the orientation of the emitter plane, i.e. the coplanar arrangement of the at least three ultrasonic emitters (primary and at least two secondary ultrasonic emitters) from the uncorrected positions of the at least three ultrasonic emitters. As the nominal emission direction of the primary ultrasonic emitter, and preferably of all (or at least two) coplanar secondary emitters is known, also the orientation of the primary ultrasonic emitter (or all ultrasonic emitters, respectively) can be determined by geometrical relationships known to the one skilled in the art. This determination has accordingly not to be described in detail here.

In the case that an iteration is performed, it is proposed according to an example embodiment of the present description to correct the position of all at least three coplanar ultrasonic emitters in the way that each of the coplanar ultrasonic emitters is chosen cyclically as primary ultrasonic emitter and the remaining (at least two) coplanar ultrasonic emitters are chosen as secondary ultrasonic emitters. For each of these cycles, a correction is performed as described before. Of course, the uncorrected positions of all ultrasonic emitters in the first cycle can be used in any further cycle of the method. Alternatively, after having determined a corrected position for one of the ultrasonic emitters, this corrected position can be used instead of the uncorrected position.

According to the present description, a use of the method as described before is the tracking of the movement of a primary ultrasonic emitter in space. Tracking in space can - as described before - mean to determine the position and/or orientation of the primary ultrasonic emitter in space as the emitter is moving at different times. To this aim, the emitter can be attached using a suited holder to an object whose movement is to be tracked in space. The object might be also a person, for example the head of a person to which the ultrasonic emitters, i.e. the at least one primary ultrasonic emitter and the at least two secondary ultrasonic emitters, are attached as an emitter array by means of a suited holder. This might be used to analyze the movement of the object in space. An embodiment of this method is related to a laboratory environment.

In the measurement device, preferably all coplanar ultrasonic emitters are of the same type such that they have the same emission characteristic. In this case, the emission angle dependence can be determined empirically and used as distance correction for all of the emitters.

In a embodiment, the nominal emission direction of the primary ultrasonic emitter is parallel to the normal of the coplanar primary and secondary ultrasonic emitters, i.e. the plane of ultrasonic emitter array. This simplifies the necessary geometrical calculations. Further, it is sensible that the nominal emission direction of in particular all secondary ultrasonic emitters is parallel to the nominal emission direction of the primary ultrasonic emitter. In particular, the nominal emission directions of all ultrasonic emitters, i.e. the primary ultrasonic emitter and the secondary ultrasonic emitters can be parallel to the normal of the coplanar emitter array.

According to an embodiment of the proposed measurement device in line with the present description, the measurement device can comprise a holder for the coplanar emitter array having a rotational axis wherein the coplanar emitter array is attachable to the holder such that the coplanar emitter array is pivot-mounted around this rotational axis. In such arrangement, the primary ultrasonic emitter may be centered in the rotational axis of the emitter array. Thus, by rotation of the holder, the primary ultrasonic emitter rotates around the rotation axis such that the primary ultrasonic emitter has in each rotation position the same (known) distance to the ultrasonic receiver or ultrasonic receiver array. This arrangement is useful for an empirical determination of the distance correction values. In such an arrangement, the distance correction values can be collected rotating the holder around the rotational axis. The emission angle can then be determined directly using the uncorrected or corrected positions of all ultrasonic emitters, i.e. the primary ultrasonic emitter and the at least two secondary ultrasonic emitters. This measurement can be performed at different positions and/or orientations in space.

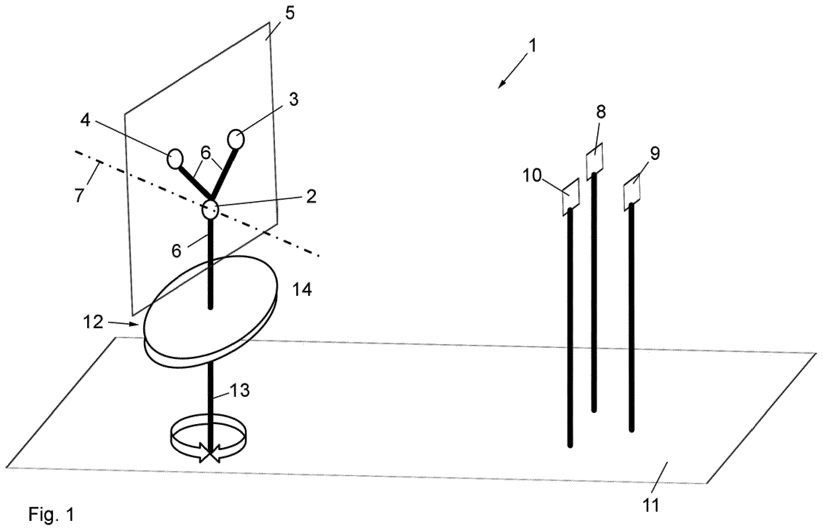

In Fig. 1, an example measurement device 1 according to the present description is shown for performing a method for determining a spatial correction of a primary ultrasonic emitter 2. The measurement device 1 comprises one primary ultrasonic emitter 2 and two secondary ultrasonic emitters 3, 4 arranged in a coplanar emitter array 5 designated also as emitter plane. The primary ultrasonic emitter 2 and the two secondary ultrasonic emitters 3, 4 are fixed in the coplanar emitter array 5 by connecting rods 6.

The coplanar emitter array 5 is shown in Fig. 1 as a plane although the measurement device 1 does not have a real (tangible) plane. Emitter plane 5 is shown in order to indicate that the three ultrasonic emitters 2, 3, 4 are positioned coplanar in one emitter plane (as three points in space always span a plane). The nominal emission direction of the primary ultrasonic emitter and of the at least two secondary ultrasonic emitters 3, 4 is known relative to the coplanar emitter array 5. The normal 7 to the coplanar emitter array 5 is in the example embodiment parallel to the nominal emission direction of the three emitters 2, 3, 4 and also designated as normal vector of the emitters 2, 3, 4.

The measurement device 1 further comprises at least three different ultrasonic receivers 8, 9, 10 in form of microphones for receiving the ultrasonic waves emitted as ultrasonic signal by the ultrasonic emitters 2, 3, 4. The ultrasonic receivers 8, 9, 10 are calibrated in space 11 which means that the position of the ultrasonic receivers 8, 9, 10 is known in the coordinate system of the space 11 being the calibration space.

Further, all ultrasonic receivers 8, 9, 10 are positioned stationary in space 11 to receive the ultrasonic signals from the primary ultrasonic emitter 2 and the at least two secondary ultrasonic emitters 3, 4 of the emitter array 5.

The coplanar emitter array 5 is attachable (and in Fig. 1 attached) to a holder 12 having a rotational axis 13 as indicated by the double sided arrow. Connected to the rotational axis 13 is further a holder plate 14 at which one connecting rod 6 of the coplanar emitter array 5 can be attached. Thus, the coplanar emitter array 5 is pivot-mounted around the rotational axis 13 of the holder 12 wherein the primary ultrasonic emitter 2 is centered in the rotational axis 13 of the emitter array 5. The rotational axis 13 of the holder 12 is preferably coaxial to the connecting rod 6 attachable with its one end to a holder plate 14. To the other end of this connecting rod 6, the primary ultrasonic emitter 2 is fixed. For example, the holder 12 can be a tripod with a pan-head.

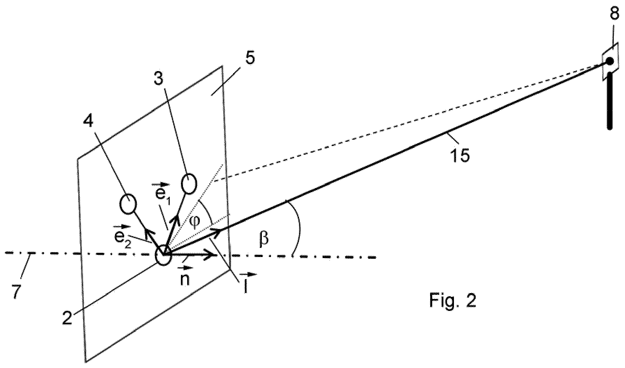

Referring now to Fig. 2, the geometrical relationship between the emitter array 5 and an ultrasonic receiver, in the example the ultrasonic receiver 8, is explained with respect to the primary ultrasonic emitter 2. The normal 7 of the emitter array 5 coincidences with the normal of the primary ultrasonic emitter 2 which is the nominal emission direction of an ultrasonic wave emitted from the primary ultrasonic emitter 2. Generally, the ultrasonic receiver 8 is not positioned in the normal 7 of the emitter plane, but with a certain angle thereto. As the ultrasonic receiver 8 receives an ultrasonic wave emitted by the primary ultrasonic emitter 2 (and of course of the secondary ultrasonic emitters 3, 4, respectively), the direction of the ultrasonic signal from the primary ultrasonic emitter 2 to the ultrasonic receiver 8 is following the direction of a straight line 15 between the primary ultrasonic emitter 2 (or the secondary ultrasonic emitters 3, 4, respectively) and the ultrasonic receiver 8. The direction of this straight line 15 is described in space by vector *l*. This vector *l*

incudes a polar emission angle $\beta$ with respect to the normal 7 of the emitter array plane 5 in coincidence with the nominal emission direction of the primary ultrasonic emitter 2. The direction of this normal 7 is indicated by vector **n**.

The projections of straight line 15 to the emitter plane 5 (coplanar emitter array) can be described by an azimuthal angle $\varphi$ in the emitter plane 5. The emitter plane 5 is spanned by the two connecting vectors **e1** between the primary ultrasonic emitter 2 and the first secondary ultrasonic emitter 3 and the vector **e2** between the primary ultrasonic emitter 2 and the second secondary ultrasonic emitter 4.

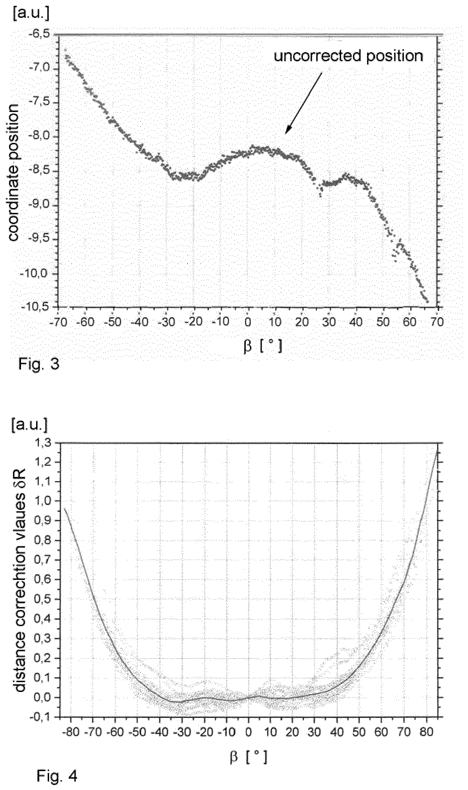

Fig. 3 is a diagram showing a coordinate position in space 11 obtained or reconstructed from different measurements of the distance obtained from the ultrasonic signal of the primary ultrasonic emitter 2 detected in the ultrasonic receiver 8 by converting the runtime of a ultrasonic signal into a distance value as described in the beginning. This measurement is performed with the coplanar emitter array 5 attached to the holder 12 so that the real distance (and the real coordinate position in space 11, respectively) between the primary ultrasonic emitter 2 and the ultrasonic receiver 8 is constant. The distance at the polar angle $\beta = 0°$ describes the real known distance.

Fig. 3, however, shows a deviation in the reconstructed coordinate position in space 11 when rotating the primary ultrasonic emitter 2 around the rotational axis 13. Expected is a flat line, since the real distance from the emitter 2 to the receiver 8 (and therewith the real coordinated position in space 11) is constant for all angles $\beta$.

Fig. 4 shows corresponding distance correction values $\delta R$ measured, e.g. with the measurement device 1 comprising the holder 12 to measure the position of the primary ultrasonic emitter 2 with different rotation angles $\beta$, $\varphi$ (corresponding to the ultrasonic emission angles) at the same known and constant real distance between the primary ultrasonic emitter 2 and one of the ultrasonic receiver 8 as described before. The result is obtained by correlation the measured distance to the known distance and plotted for different polar emission angles $\beta$ wherein the deviation at $\beta = 0°$ is defined to be zero (i.e. the correct known distance is determined at this angle $\beta$). This corresponds to an arrangement where the ultrasonic receiver 8 is disposed in the normal 7 of the primary ultrasonic emitter 2 corresponding to its nominal emission direction. The diagram contains data of several measurements of the distance at different positions and orientations of the primary ultrasonic emitter 2 relative to the ultrasonic receiver, wherein the distance between the ultrasonic receiver 8 and the primary ultrasonic emitter 2 was basically constant. It can be seen that - for the type of ultrasonic emitter used - the position of the ultrasonic emitter in space has - besides the dependence of the polar emission angle $\beta$ - no huge impact on the distance correction values. Further, the distance correction values are relatively symmetrical to $\beta = 0°$.

In other words, the dependence on the azimuthal emission angle $\varphi$ can according to the present description be neglected for a huge number of types of ultrasonic emitters. This is in particular true for ultrasonic emitters having a vibrating surface to create the ultrasonic waves, such as piezo elements, and/or ultrasonic emitters having a defined emission aperture of the emitter casing. The determination of the emission angle $\beta$, $\varphi$ might thus be reduced to the determination of the polar emission angle $\beta$ for a huge number of cases.

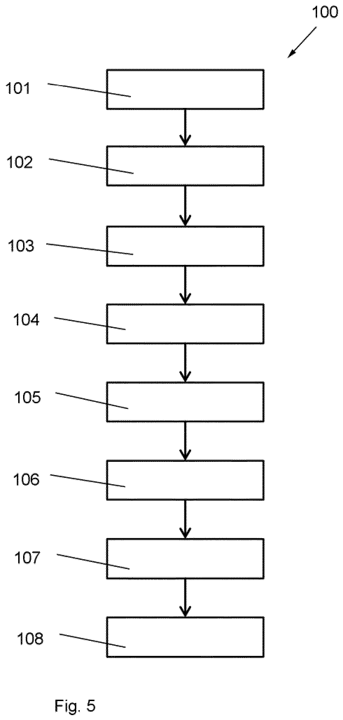

On basis of this background, an embodiment of the method for determining a spatial correction of a primary ultrasonic emitter 2 can comprise in particular the following steps according to the procedure flow 100 shown in Fig. 5.

In a first step 101, ultrasonic signals from the primary ultrasonic emitter 2 and the at least two secondary ultrasonic emitters 3, 4 are emitted consecutively wherein the position of the emitter array 5 remains constant. To this aim, the coplanar emitter array 5 can be attached with one of its connecting rods 6 to the object, the position of which is to be determined. This object might be also a human being. To this aim, a holder might be provided to attach the emitter array 5 to the human being. One example is a helmet-type holder to which the lower connecting rod 6 according to Fig. 1 is attached instead of the holder 12 shown in Fig. 1. The method is in particular useful if not only one position of the object is to be determined but a motion tracking of the object is to be performed in particular in a laboratory environment in which the ultrasonic receivers, i.e. the at least three microphones 8, 9, 10, are installed.

In a second step 102, the runtime of the ultrasonic signal emitted in step 101 to each of the ultrasonic receivers 8, 9, 10 is measured. Based on this measurement, an uncorrected position of the ultrasonic emitter is determined for each of the primary ultrasonic emitter 2 and the secondary ultrasonic emitters 3, 4 on basis of the runtime the respective ultrasonic signal. To this aim, the same ultrasonic signal of each emitter 2, 3, 4 is measured in each of the at least three ultrasonic receivers 8, 9, 10. Thus, the runtime to each ultrasonic receiver 8, 9, 10 is measured. These runtimes are converted on basis of the known speed of sound c via multiplication of the speed of sound c with the measured runtime t. Based on the knowledge that the ultrasonic signal received in the three ultrasonic receivers 8, 9, 10 was emitted at the same position, it is possible to determine the position of the ultrasonic emitter with trilateration methods as the ultrasonic receivers 8, 9, 10 are calibrated in space.

With the known positions of the primary ultrasonic emitter 2 and the secondary ultrasonic emitters 3, 4, even if these are uncorrected positions, the normal 7 of a plane of the emitter array 5 is determined. This emitter plane 5 is defined by the uncorrected positions of the primary ultrasonic emitter 2 and the secondary ultrasonic emitters 3, 4. The normal 7 corresponds to the nominal emission directions of the primary ultrasonic emitter 2 and the secondary ultrasonic emitters 3 and 4. From the known position of the linear independent (and thus spanning the emitter plane 5) ultrasonic emitters 2, 3, 4, connecting vectors **e1** between the primary ultrasonic emitter 2 and the first secondary ultrasonic emitter

3 and *e2* between the primary ultrasonic emitter 2 and the second secondary ultrasonic emitter 4 are defined. These two vectors span the plane of the coplanar emitter array 5. Accordingly, the normal 7 of the emitter plane can easily be calculated by the cross-product of the two vectors *e1* and *e2* as *n* = *e1* × *e2*.

In the following step 104, the emission angle (in this example only the polar emission angle $\beta$) between the nominal emission direction of the primary ultrasonic emitter 2 (corresponding to the normal 7 of the emitter plane 5) and the direction of the straight line 15 between the primary ultrasonic emitter 2 are determined for each of the ultrasonic receivers 8, 9, 10. As the direction of the straight line 15 is described by vector *l*, the angle $\beta$ can easily be calculated by the dot product of the vector *n* of the nominal emission direction and the vector *l* of the direction of straight line 15 as $\beta$ = *arc* cos (*n* · *l*).

Following, in step 105, uncorrected distances R between the primary ultrasonic emitter 2 and each of the ultrasonic receivers 8, 9, 10 are calculated using the non-corrected coordinates of the primary ultrasonic emitter 2 and the ultrasonic receivers 8, 9, 10. This determination can be performed with basic knowledge of the one skilled in the art.

After determination of the uncorrected distances, in step 106 a distance correction value for the distance between the primary ultrasonic emitter and each of the ultrasonic receivers is determined depending on the respective emission angle $\beta$. This distance correction value $\delta R$ was determined empirically on the basis of the data measured as represented in Fig. 4. In order to determine a distance correction value $\delta R$, a fourth-order polynomial was fitted to the data points of Fig. 4. A formula of the fourth-order polynomial is given by:

$$\delta R(\beta) = a + b \cdot \beta + c \cdot \beta^2 + d \cdot \beta^3 + e \cdot \beta^4$$

wherein *a, b, c, d, e* are fit parameters. In the example, these parameters are fixed values. However, if also the dependence of the azimuthal emission angle $\varphi$ is to be considered, these parameters *a, b, c, d, e* might be a function of the azimuthal emission angle $\varphi$, i.e. $a(\varphi)$, $b(\varphi)$, $c(\varphi)$, $d(\varphi)$, $e(\varphi)$ a) phi, b) phi, c) phi und d) phi. As fit procedure, at least-square fit might be used.

The present description is however not restricted to the use of a fourth-order polynomial as fit function or the method of the least-square fit.

Knowing the angle $\beta$, the correction value $\delta R(\beta)$ can be directly derived from the fit function.

In step 107, the respective distance correction value $\delta R(\beta)$ is applied to the uncorrected distances between the primary ultrasonic emitter 2 and each of the ultrasonic receivers 8, 9, 10 to receive corrected distances between the primary ultrasonic emitter 2 and each of the ultrasonic receivers 8, 9, 10.

In a last step 108, the corrected position (coordinate position in space 11) of the primary ultrasonic emitter 2 is determined, e.g. based on a trilateration method as described before.

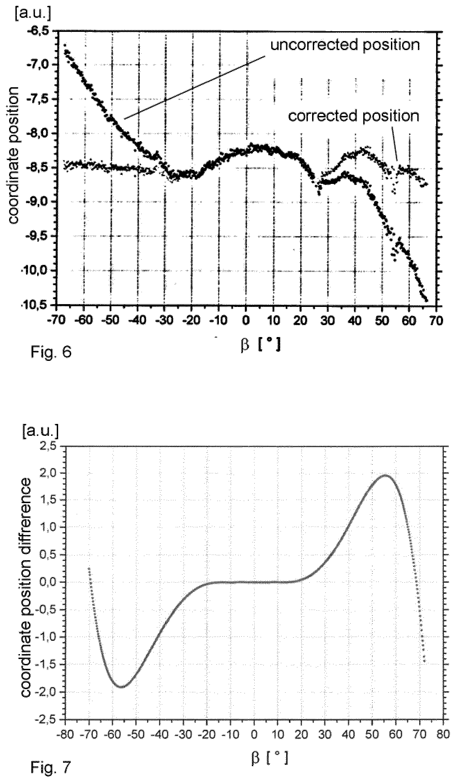

The result of this correction according to the method described before is shown in Fig. 6 plotting the non-corrected positions as already shown in Fig. 3 against the corrected positions. The correction $\delta R$ is increasing with an increasing emission angle $\beta$. Accordingly, Fig. 6 demonstrates that fluctuations in the positioning detection are much smaller after applying the proposed method and correction.

As evident from Fig. 7 it is usually sufficient to execute the proposed correction method only once. This means, that non-corrected coordinates are used for calculating the emission angles $\beta$ (and $\varphi$, if applicable). These angles $\beta$, $\varphi$ are input parameters for the distance correction value $\delta R$ depending on these angles $\beta$ (and $\varphi$, if applicable). A simulation shown in Fig. 7 revealed that the difference between $\beta$ based on uncorrected and corrected positions is very small. It is less than 0,05° under realistic measurement conditions in a laboratory environment. These small deviations lead to position changes in the order of $10^{-3}$ of the reconstructed coordinate position in space 11. Since other influencing effects, such as temperature, radiance, local temperature drifts, air movements, etc., play a much more important role, a second iteration loop of the method using the corrected positions for the primary ultrasonic emitter 2 and the secondary ultrasonic emitters 3, 4 can be neglected.

It is to be noted, that the secondary ultrasonic emitters 3, 4 are only used for the determination of the orientation of the nominal emission direction based on the orientation of the plane of the emitter array 5. This is a valuable embodiment as the error in determination of this plane is limited to the order of the measurement principles measuring the distance based on an emitted ultrasonic signal. However, it is generally possible to substitute the secondary ultrasonic emitters 3, 4 in line with the present description by other measurement devices, such as an inertial measurement unit IMU in order to determine the orientation of the primary ultrasonic emitter 2 and its nominal emission direction.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

While particular embodiments of the present description have been illustrated and described, it would be obvious to those skilled in the art that various other changes and modifications can be made as long as they do not depart from the scope of the appended claims.

List of reference signs:

| | |
|---|---|
| 1 | Measurement device |
| 2 | primary ultrasonic emitter |
| 3 | secondary ultrasonic emitter |
| 4 | secondary ultrasonic emitter |
| 5 | coplanar emitter array (emitter plane) |
| 6 | connecting rod |
| 7 | normal of emitter plane in coincidence with the nominal emission direction of the emitters |
| 8 | ultrasonic receiver |
| 9 | ultrasonic receiver |
| 10 | ultrasonic receiver |
| 11 | calibration space |
| 12 | holder |
| 13 | rotational axis |
| 14 | holder plate |
| 15 | straight line |

| | |
|---|---|
| 100 | flow in accordance with an embodiment of the proposed method |
| 101 to 108 | method steps |

| | |
|---|---|
| *l* | vector in the direction of the straight line |
| *n* | vector in the nominal emission direction |
| *e1* | vector in the direction between primary ultrasonic emitter 2 and secondary ultrasonic emitter 3 |
| *e2* | vector in the direction between primary ultrasonic emitter 2 and secondary ultrasonic emitter 4 |

**Claims**

1.  Method for determining a spatial correction of a primary ultrasonic emitter (2) by evaluating the ultrasonic signal emitted by the primary ultrasonic emitter (2) and received by at least three ultrasonic receivers (8, 9, 10) calibrated in space (11), wherein the primary ultrasonic emitter (2) is arranged in a coplanar emitter array (5) with at least two secondary ultrasonic emitters (3, 4) and the nominal emission direction of the primary ultrasonic emitter (2) is known relative to the coplanar emitter array (5), and wherein the ultrasonic receivers (8, 9, 10) are positioned to receive ultrasonic signals from the primary ultrasonic emitter (2) and the at least two secondary ultrasonic emitters (3, 4) of the emitter array (5), said method comprising the following steps:

    - emitting consecutively ultrasonic signals from the primary ultrasonic emitter (2) and the secondary ultrasonic emitters (3, 4);
    - measuring the runtime of the ultrasonic signal to the ultrasonic receivers (8, 9, 10) and determining an uncorrected position of the ultrasonic emitter for each of the primary ultrasonic emitter (2) and the secondary ultrasonic emitters (3, 4) on basis of the runtime of the ultrasonic signal;
    - determining the normal (*n*) of the plane of the emitter array (5) wherein the plane is defined by the uncorrected positions of the primary ultrasonic emitter (2) and the coplanar secondary ultrasonic emitters (3, 4);
    - determining the emission angle ($\beta$, $\varphi$) between the nominal emission direction of the primary ultrasonic emitter (2) and the direction of a straight line (15) between the primary ultrasonic emitter (2) and one of the ultrasonic receivers for each of the ultrasonic receivers (8, 9, 10);
    - determining the uncorrected distances between the primary ultrasonic emitter (2) and each of the ultrasonic receivers (8, 9, 10);
    - determining a distance correction value ($\delta R$) for the distance between the primary ultrasonic emitter (2) and each of the ultrasonic receivers (8, 9, 10) depending on the respective emission angle ($\beta$, $\varphi$);
    - applying the respective distance correction values ($\delta R$) to the uncorrected distances between the primary ultrasonic emitter (2) and each of the ultrasonic receivers (3, 4) to receive corrected distances between the primary ultrasonic emitter (2) and each of the ultrasonic receivers (8, 9, 10);
- determining a corrected position of the primary ultrasonic emitter (2) on basis of the corrected distances between the primary ultrasonic emitter (2) and each of the ultrasonic receivers (8, 9, 10).

2. Method according to claim 1, **characterized in that** the distance correction value ($\delta R$) is chosen from an empirical determination, wherein the empirical determination is performed by measuring the runtime of an ultrasonic signal emitted by an ultrasonic emitter of the same type as the primary ultrasonic emitter (2) at a constant known distance to one of the ultrasonic receivers (8, 9, 10) for different emission angles ($\beta$, $\varphi$) and by correlating the different runtimes of the ultrasonic signal at different emission angles ($\beta$, $\varphi$) to the constant known distance.

3. Method according to claim 2, **characterized in that** the distance correction values ($\delta R$) for the different emission angles ($\beta$, $\varphi$) are stored in a look-up table for determining the distance correction ($\delta R$) value corresponding to the determined emission angle ($\beta$, $\varphi$).

4. Method according to claim 2 or 3, **characterized in that** the distance correction values ($\delta R$) for the different emission angles ($\beta$, $\varphi$) are fitted to a distance correction function describing the distance correction value ($\delta R$) as a function to the emission angle ($\beta$, $\varphi$).

5. Method according to any of the preceding claims, **characterized in that** the emission angle ($\beta$, $\varphi$) is described in a spherical coordinate system as an polar emission angle ($\beta$) describing the angle between the nominal emission direction of the primary ultrasonic emitter (2) and the straight line (15) between the primary ultrasonic emitter (15) and one of the ultrasonic receivers (8, 9, 10) and as an azimuthal emission angle ($\varphi$) describing the angle of the projection of the straight line (15) between the primary ultrasonic emitter (2) and the one of the ultrasonic receivers (8, 9, 10) onto the plane of the emitter array (5) perpendicular to the nominal emission direction of the primary ultrasonic emitter (2).

6. Method according to any of the claims 1 to 4, **characterized in that** the emission angle is described as an polar emission angle ($\beta$) only describing the angle between the nominal emission direction of the primary ultrasonic emitter (2) and the straight line (15) between the primary ultrasonic emitter (2) and one of the ultrasonic receivers (8, 9, 10).

7. Use of the method according to any one of the claims 1 to 6 for tracking the movement of a primary ultrasonic emitter (2) in space (11).

8. Measurement device for performing the method as described in any one of the claims 1 to 7 comprising a primary and at least two secondary ultrasonic emitters (2, 3, 4) arranged in a coplanar emitter array (5) wherein the nominal emission direction of the primary ultrasonic emitter (2) and preferably the at least two secondary ultrasonic emitters (3, 4) is known relative to the coplanar emitter array (5), and comprising at least three ultrasonic receivers (8, 9, 10) calibrated in space (11) and positioned to receive ultrasonic signals from the primary ultrasonic emitter (2) and the at least two secondary ultrasonic emitters (3, 4) of the coplanar emitter array (5), and a processing unit, **characterized in that** the processing unit is set up to perform the method according to any one of the claims 1 to 7.

9. Measurement device according to claim 8, **characterized in that** the nominal emission direction of the primary ultrasonic emitter (2) is parallel to the normal (***n***) of the coplanar emitter array (5) of the primary and secondary ultrasonic emitters (2, 3, 4).

10. Measurement device according to claim 8 or 9, **characterized in that** the nominal emission direction of the secondary ultrasonic emitters (3, 4) is parallel to the nominal emission direction of the primary ultrasonic emitter (2).

11. Measurement device according to any one of the claims 8 to 10, **characterized in that** the measurement device (1) comprises a holder (12) for the coplanar emitter array (5) having a rotational axis (13) wherein the coplanar emitter array (5) is attachable to the holder (12) such that the coplanar emitter array (5) is pivot-mounted around the rotational axis (13) and that the primary ultrasonic emitter (2) is centered in the rotational axis (13).

12. Measurement device according to claim 11, **characterized in that** the holder (12) is adjustable in the axial direction of the rotation axis (13).

**Patentansprüche**

1. Verfahren zum Bestimmen einer räumlichen Korrektur eines primären Ultraschallsenders (2) durch Bewerten des Ultraschallsignals, das vom primären Ultraschallsender (2) ausgegeben wurde und von mindestens drei Ultraschallempfängern (8, 9, 10), die im Raum (11) kalibriert sind, empfangen wurde, wobei der primäre Ultraschallsender (2) in einem komplanaren Senderfeld (5) mit mindestens zwei sekundären Ultraschallsendern (3, 4) angeordnet ist und die nominale Ausgaberichtung des primären Ultraschallsenders (2) relativ zum komplanaren Senderfeld (5) bekannt ist, und wobei die Ultraschallempfänger (8, 9, 10) positioniert sind, um Ultraschallsignale vom primären Ultraschallsender (2) und den mindestens zwei sekundären Ultraschallsendern (3, 4) des Senderfelds (5) zu empfangen, wobei das Verfahren die folgenden Schritte umfasst:

   - konsekutives Ausgeben von Ultraschallsignalen von dem primären Ultraschallsender (2) und den sekundären Ultraschallsendern (3, 4);
   - Messen der Laufzeit des Ultraschallsignals zu den Ultraschallempfängern (8, 9, 10) und Bestimmen einer unkorrigierten Position des Ultraschallsenders für jeden des primären Ultraschallsenders (2) und der sekundären Ultraschallsender (3, 4) auf Grundlage der Laufzeit des Ultraschallsignals;
   - Bestimmen der Normalen (**n**) der Ebene des Senderfelds (5), wobei die Ebene durch die unkorrigierten Positionen des primären Ultraschallsenders (2) und der komplanaren sekundären Ultraschallsender (3, 4) definiert ist;
   - Bestimmen des Ausgabewinkels ($\beta$, $\varphi$) zwischen der nominalen Ausgaberichtung des primären Ultraschallsenders (2) und der Richtung einer geraden Linie (15) zwischen dem primären Ultraschallsender (2) und einem der Ultraschallempfänger für jeden der Ultraschallempfänger (8, 9, 10);
   - Bestimmen der unkorrigierten Distanzen zwischen dem primären Ultraschallsender (2) und jedem der Ultraschallempfänger (8, 9, 10);
   - Bestimmen eines Distanzkorrekturwerts ($\delta R$) für die Distanz zwischen dem primären Ultraschallsender (2) und jedem der Ultraschallempfänger (8, 9, 10) abhängig von dem jeweiligen Ausgabewinkel ($\beta$, $\varphi$);
   - Anwenden der jeweiligen Distanzkorrekturwerte ($\delta R$) auf die unkorrigierten Distanzen zwischen dem primären Ultraschallsender (2) und jedem der Ultraschallempfänger (3, 4), um korrigierte Distanzen zwischen dem primären Ultraschallsender (2) und jedem der Ultraschallempfänger (8, 9, 10) zu erhalten;
   - Bestimmen einer korrigierten Position des primären Ultraschallsenders (2) auf Grundlage der korrigierten Distanzen zwischen dem primären Ultraschallsender (2) und jedem der Ultraschallempfänger (8, 9, 10).

2. Verfahren nach Anspruch 1, **dadurch gekennzeichnet, dass** der Distanzkorrekturwert ($\delta R$) von einer empirischen Ermittlung gewählt wird, wobei die empirische Ermittlung durch Messen der Laufzeit eines Ultraschallsignals, das von einem Ultraschallsender desselben Typs wie dem primären Ultraschallsender (2) in einer konstanten, bekannten Distanz zu einem der Ultraschallempfänger (8, 9, 10) ausgegeben wird, für verschiedene Ausgabewinkel ($\beta$, $\varphi$) und Korrelieren der verschiedenen Laufzeiten des Ultraschallsignals in verschiedenen Ausgabewinkeln ($\beta$, $\varphi$) zu der konstanten, bekannten Distanz durchgeführt wird.

3. Verfahren nach Anspruch 2, **dadurch gekennzeichnet, dass** die Distanzkorrekturwerte ($\delta R$) für die verschiedenen Ausgabewinkel ($\beta$, $\varphi$) in einer Referenztabelle zum Bestimmen des Distanzkorrekturwerts ($\delta R$) entsprechend dem bestimmen Ausgabewinkels ($\beta$, $\varphi$) gespeichert sind.

4. Verfahren nach Anspruch 2 oder 3, **dadurch gekennzeichnet, dass** die Distanzkorrekturwerte ($\delta R$) für die verschiedenen Ausgabewinkel ($\beta$, $\varphi$) in eine Distanzkorrekturfunktion eingepasst sind, die den Distanzkorrekturwert ($\delta R$) als eine Funktion des Ausgabewinkels ($\beta$, $\varphi$) beschreibt.

5. Verfahren nach einem der vorstehenden Ansprüche, **dadurch gekennzeichnet, dass** der Ausgabewinkel ($\beta$, $\varphi$) in einem sphärischen Koordinatensystem als ein polarer Ausgabewinkel ($\beta$), der den Winkel zwischen der nominalen Ausgaberichtung des primären Ultraschallsenders (2) und der geraden Linie (15) zwischen dem primären Ultraschallsender (15) und einem der Ultraschallempfänger (8, 9, 10) beschreibt, und als ein azimutaler Ausgabewinkel ($\varphi$) beschrieben ist, der den Projektionswinkel der geraden Linie (15) zwischen dem primären Ultraschallsender (2) und dem einen der Ultraschallempfänger (8, 9, 10) auf die Ebene des Senderfelds (5) senkrecht zur nominalen Ausgaberichtung des primären Ultraschallsenders (2) beschreibt.

6. Verfahren nach einem der Ansprüche 1 bis 4, **dadurch gekennzeichnet, dass** der Ausgabewinkel als ein polarer Ausgabewinkel ($\beta$) beschrieben ist, der nur den Winkel zwischen der nominalen Ausgaberichtung des primären Ultraschallsenders (2) und der geraden Linie (15) zwischen dem primären Ultraschallsender (2) und einem der Ultraschallempfänger (8, 9, 10) beschreibt.

7. Verwendung des Verfahrens nach einem der Ansprüche 1 bis 6 zum Verfolgen der Bewegung eines primären Ultraschallsenders (2) im Raum (11).

8. Messvorrichtung zum Durchführen des Verfahrens, wie in einem der Ansprüche 1 bis 7 beschrieben, umfassend einen primären und mindestens zwei sekundäre Ultraschallsender (2, 3, 4), die in einem komplanaren Senderfeld (5) angeordnet sind, wobei die nominale Ausgaberichtung des primären Ultraschallsenders (2) und vorzugsweise der mindestens zwei sekundären Ultraschallsender (3, 4) relativ zum komplanaren Senderfeld (5) bekannt ist, und umfassend mindestens drei Ultraschallempfänger (8, 9, 10), die im Raum (11) kalibriert sind und positioniert sind, um Ultraschallsignale vom primären Ultraschallsender (2) und den mindestens zwei sekundären Ultraschallsendern (3, 4) des komplanaren Senderfelds (5) zu empfangen, und eine Verarbeitungseinheit, **dadurch gekennzeichnet, dass** die Verarbeitungseinheit eingerichtet ist, um das Verfahren nach einem der Ansprüche 1 bis 7 durchzuführen.

9. Messvorrichtung nach Anspruch 8, **dadurch gekennzeichnet, dass** die nominale Ausgaberichtung des primären Ultraschallsenders (2) parallel zur Normalen (n) des komplanaren Senderfelds (5) der primären und sekundären Ultraschallsender (2, 3, 4) liegt.

10. Messvorrichtung nach Anspruch 8 oder 9, **dadurch gekennzeichnet, dass** die nominale Ausgaberichtung der sekundären Ultraschallsender (3, 4) parallel zur nominalen Ausgaberichtung des primären Ultraschallsenders (2) liegt.

11. Messvorrichtung nach einem der Ansprüche 8 bis 10, **dadurch gekennzeichnet, dass** die Messvorrichtung (1) einen Halter (12) für das komplanare Senderfeld (5) aufweist, der eine Drehachse (13) aufweist, wobei das komplanare Senderfeld (5) am Halter (12) derart zu befestigen ist, dass das komplanare Senderfeld (5) um die Drehachse (13) drehbar befestigt ist, und dass der primäre Ultraschallsender (2) in der Drehachse (13) zentriert ist.

12. Messvorrichtung nach Anspruch 11, **dadurch gekennzeichnet, dass** der Halter (12) in der Axialrichtung der Drehachse (13) einstellbar ist.

**Revendications**

1. Procédé de détermination d'une correction spatiale d'un émetteur ultrasonore primaire (2) en évaluant le signal ultrasonore émis par l'émetteur ultrasonore primaire (2) et reçu par au moins trois récepteurs ultrasonores (8, 9, 10) étalonnés dans un espace (11), dans lequel l'émetteur ultrasonore primaire (2) est disposé dans un réseau d'émetteurs coplanaires (5) avec au moins deux émetteurs ultrasonores secondaires (3, 4) et la direction nominale d'émission de l'émetteur ultrasonore primaire (2) est connue par rapport au réseau d'émetteurs coplanaires (5), et dans lequel les récepteurs ultrasonores (8, 9, 10) sont positionnés de manière à recevoir les signaux ultrasonores provenant de l'émetteur ultrasonore primaire (2) et desdits au moins deux émetteurs ultrasonores secondaires (3, 4) du réseau d'émetteurs (5), ledit procédé comprenant les étapes suivantes :

   - émission consécutive de signaux ultrasonores à partir de l'émetteur ultrasonore primaire (2) et des émetteurs ultrasonores secondaires (3, 4) ;
   - mesure du temps de marche du signal ultrasonore vers les récepteurs ultrasonores (8, 9, 10) et détermination d'une position non corrigée de l'émetteur ultrasonore pour chacun parmi l'émetteur ultrasonore primaire (2) et les émetteurs ultrasonores secondaires (3, 4) sur la base du temps de marche du signal ultrasonore ;
   - détermination de la normale ($n$) du plan du réseau d'émetteurs (5) dans lequel le plan est défini par les positions non corrigées de l'émetteur ultrasonore primaire (2) et des émetteurs ultrasonores secondaires coplanaires (3, 4) ;
   - détermination de l'angle d'émission ($\beta$, $\varphi$) entre la direction nominale d'émission de l'émetteur ultrasonore primaire (2) et la direction d'une ligne droite (15) entre l'émetteur ultrasonore primaire (2) et l'un des récepteurs ultrasonores pour chacun des récepteurs ultrasonores (8, 9, 10) ;
   - détermination des distances non corrigées entre l'émetteur ultrasonore primaire (2) et chacun des récepteurs ultrasonores (8, 9, 10) ;
   - détermination d'une valeur de correction de distance ($\delta R$) pour la distance entre l'émetteur ultrasonore primaire (2) et chacun des récepteurs ultrasonores (8, 9, 10) en fonction de l'angle d'émission respectif ($\beta$, $\varphi$) ;
   - application des valeurs de correction de distance respectives ($\delta R$) aux distances non corrigées entre l'émetteur ultrasonore primaire (2) et chacun des récepteurs ultrasonores (3, 4) pour recevoir des distances corrigées entre l'émetteur ultrasonore primaire (2) et chacun des récepteurs ultrasonores (8, 9, 10) ;
- détermination d'une position corrigée de l'émetteur ultrasonore primaire (2) sur la base des distances corrigées entre l'émetteur ultrasonore primaire (2) et chacun des récepteurs ultrasonores (8, 9, 10).

2. Procédé selon la revendication 1, **caractérisé en ce que** la valeur de correction de distance ($\delta R$) est choisie parmi une détermination empirique, dans lequel la détermination empirique est effectuée en mesurant le temps de marche d'un signal ultrasonore émis par un émetteur ultrasonore du même type que l'émetteur ultrasonore primaire (2) à une distance connue constante par rapport à un des récepteurs ultrasonores (8, 9, 10) pour différents angles d'émission ($\beta$, $\varphi$) et en corrélant les différents temps de marche du signal ultrasonore à différents angles d'émission ($\beta$, $\varphi$) à la distance connue constante.

3. Procédé selon la revendication 2, **caractérisé en ce que** les valeurs de correction de distance ($\delta R$) pour les différents angles d'émission ($\beta$, $\varphi$) sont stockées dans un tableau de correspondance pour déterminer la valeur de correction de distance ($\delta R$) correspondant à l'angle d'émission déterminé ($\beta$, $\varphi$).

4. Procédé selon la revendication 2 ou 3, **caractérisé en ce que** les valeurs de correction de distance ($\delta R$) pour les différents angles d'émission ($\beta$, $\varphi$) sont ajustées à une fonction de correction de distance décrivant la valeur de correction de distance ($\delta R$) en fonction de l'angle d'émission ($\beta$, $\varphi$).

5. Procédé selon l'une quelconque des revendications précédentes, **caractérisé en ce que** l'angle d'émission ($\beta$, $\varphi$) est décrit dans un système de coordonnées sphériques en tant qu'angle d'émission polaire ($\beta$) décrivant l'angle entre la direction nominale d'émission de l'émetteur ultrasonore primaire (2) et la ligne droite (15) entre l'émetteur ultrasonore primaire (15) et l'un des récepteurs ultrasonores (8, 9, 10) et en tant qu'angle d'émission azimutal ($\varphi$) décrivant l'angle de la projection de la ligne droite (15) entre l'émetteur ultrasonore primaire (2) et celui des récepteurs ultrasonores (8, 9, 10) sur le plan du réseau d'émetteurs (5) perpendiculaire à la direction nominale d'émission de l'émetteur ultrasonore primaire (2).

6. Procédé selon l'une quelconque des revendications 1 à 4, **caractérisé en ce que** l'angle d'émission est décrit en tant qu'angle d'émission polaire ($\beta$) décrivant uniquement l'angle entre la direction nominale d'émission de l'émetteur ultrasonore primaire (2) et la ligne droite (15) entre l'émetteur ultrasonore primaire (2) et l'un des récepteurs ultrasonores (8, 9, 10).

7. Utilisation du procédé selon l'une quelconque des revendications 1 à 6, pour suivre le mouvement d'un émetteur ultrasonore primaire (2) dans l'espace (11).

8. Dispositif de mesure pour exécuter le procédé tel que décrit dans l'une quelconque des revendications 1 à 7, comprenant un émetteur ultrasonore primaire et au moins deux émetteurs ultrasonores secondaires (2, 3, 4) disposés dans un réseau d'émetteurs coplanaires (5) dans lequel la direction nominale d'émission de l'émetteur ultrasonore primaire (2) et, de préférence, desdits au moins deux émetteurs ultrasonores secondaires (3, 4) est connue par rapport au réseau d'émetteurs coplanaires (5), et comprenant au moins trois récepteurs ultrasonores (8, 9, 10) étalonnés dans l'espace (11) et positionnés de manière à recevoir des signaux ultrasonores provenant de l'émetteur ultrasonore primaire (2) et desdits au moins deux émetteurs ultrasonores secondaires (3, 4) du réseau d'émetteurs coplanaires (5), et une unité de traitement, **caractérisé en ce que** l'unité de traitement est configurée pour exécuter le procédé selon l'une quelconque des revendications 1 à 7.

9. Dispositif de mesure selon la revendication 8, **caractérisé en ce que** la direction nominale d'émission de l'émetteur ultrasonore primaire (2) est parallèle à la normale (**n**) du réseau d'émetteurs coplanaires (5) des émetteurs ultrasonores primaire et secondaires (2, 3, 4).

10. Dispositif de mesure selon la revendication 8 ou 9, **caractérisé en ce que** la direction nominale d'émission des émetteurs ultrasonores secondaires (3, 4) est parallèle à la direction nominale d'émission de l'émetteur ultrasonore primaire (2).

11. Dispositif de mesure selon l'une quelconque des revendications 8 à 10, **caractérisé en ce que** le dispositif de mesure (1) comprend un support (12) pour le réseau d'émetteurs coplanaires (5) ayant un axe de rotation (13) dans lequel le réseau d'émetteurs coplanaires (5) peut être fixé au support (12) de telle sorte que le réseau d'émetteurs coplanaires (5) est monté pivotant autour de l'axe de rotation (13) et que l'émetteur ultrasonore primaire (2) est centré dans l'axe de rotation (13).

12. Dispositif de mesure selon la revendication 11, **caractérisé en ce que** le support (12) est réglable dans la direction axiale de l'axe de rotation (13).

Fig. 1

Fig. 2

[a.u.]

Fig. 3

[a.u.]

Fig. 4

100

101

102

103

104

105

106

107

108

Fig. 5

Fig. 6

Fig. 7